# EUROPEAN PATENT SPECIFICATION

(11) **EP 0 970 324 B1**
(45) Date of publication and mention of the grant of the patent: **31.10.2001**
(21) Application number: 98911275.0
(22) Date of filing: 24.03.1998
(51) Int. Cl.: F21V 11/02

(54) **A LIGHT BOX COMPRISING A CROSS LAMELLA**
LEUCHTENKASTEN MIT QUERLAMELLE
CAISSON LUMINEUX COMPRENANT UNE LAMELLE TRANSVERSALE

(30) Priority: 24.03.1997 NL 1005610
(43) Date of publication of application: 12.01.2000
(73) Proprietor: Veko Products B.V., 1742 NL Schagen (NL)
(72) Inventor: VAN PUTTEN, Simon Cornelis, 4233 CH Ameide (NL)
(74) Representative: Vollebregt, Cornelis Jacobus, Ir.
(86) International application number: NL9800165
(87) International publication number: WO9843015

(56) References cited:
- EP-A- 0 643 259
- WO-A-90/12245
- DE-A- 4 109 492
- DE-A- 4 230 907
- DE-A- 4 243 659
- DE-A- 4 344 978

## Description

The invention relates to a light box, wherein a number of cross lamellae are arranged in at least substantially parallel relationship, transversely to the longitudinal direction of the light box, under (a) light source(s) which is housed in said light box, and wherein a cross lamella is bounded by lateral boundary surfaces, which slope upwards from the lower boundary edge of the lamella in a direction away from each other, in such a manner that the cross lamella is substantially triangular, seen in sectional view, whilst one lateral boundary surface extends from the lower boundary edge of the cross lamella over a larger height than the other lateral boundary surface.

A light box of this type can be derived from EP-A-0 643 259, whose contents are considered to be incorporated herein by this reference. The construction according to EP-A-0 643 259 is satisfactory per se.

Further there are known from DE-A-4344978 lamellae with an open upper end whereby the space between the sheets forming the in boundary surfaces of the lamellae is light-transmitting. In said known structure said sheets forming the boundary surfaces are symmetrical.

According to the invention, however, the space between the boundary surfaces is light-transmitting. This makes it possible to dispose the two boundary surfaces further apart than in the known construction, so that a smaller number of lamellae may be used in a light box of a specified length than with the constructions that have been usual so far. In addition, the light-transmitting area is increased significantly in comparison with the known construction, without the luminance being increased thereby. All this leads to an excellent lighting and light box efficiency.

The invention will be explained in more detail with reference to the accompanying figures.

Figure 1 is a diagrammatic, sectional view of two boundary surfaces of a cross lamella according to a first embodiment of the invention.

Figures 2 and 3 are corresponding sectional views of further possible embodiments.

Figure 4 is a diagrammatic, perspective view of a cross lamella according to another embodiment of the invention.

Figure 5 is a sectional view of Figure 4, seen along line V-V in Figure 4.

As is also explained in the aforesaid European patent application No. 0 643 259, a cross lamella 2 comprises two lateral boundary surfaces 4 and 5, e.g. made from metal sheet, and which extend upwards from a lower boundary edge 3' and 3'' respectively, whereby the two lower boundary edges 3' and 3'' are spaced apart by some distance in the present construction according to the invention.

Boundary surface 4 thereby extends over a larger height than boundary surface 5, whilst, as explained in the aforesaid European patent application No. 0 643 259, the upper boundary edges of boundary surfaces 4 and 5 are preferably curved in such a manner that the height of a boundary surface is larger near the ends of a cross lamella than near the centre of a cross lamella.

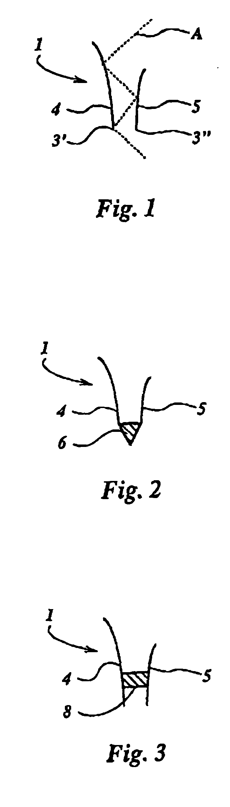

Since the space between the boundary surfaces 4 and 5 of cross lamella 2, which are reflecting on either side, is entirely open in the embodiment shown in Figure 1, light can fall not only through the space between successive lamellae, but also through the space bounded by boundary surfaces 4 and 5 of a cross lamella 2 when such cross lamellae are used in a light box, as is diagrammatically drawn for a light beam A. Care must be taken thereby that the angle which a reflected light beam exiting from the passage between boundary surfaces 4 and 5 includes with the horizontal is not smaller than approximately 35°.

In order to obtain a decorative effect, as shown in Figure 2, a light-transmitting element 6 may be disposed near the lower ends of boundary surfaces 4 and 5, which element is for example made up of a hollow or a massive body made of a light-transmitting plastic material, or of another body made of a profiled and/or completely or partially perforated material, for example a metal.

Another possibility is to mount such a light-transmitting element 8 some distance above the lower edges of boundary surfaces 4 and 5 of cross lamella 2, as is shown in Figure 3. Also combinations of the constructions shown in Figures 2 and 3 are conceivable. The light-transmitting element positioned between the boundary surfaces may thereby extend rectilinearly or curvilinearly along the length of the cross lamella.

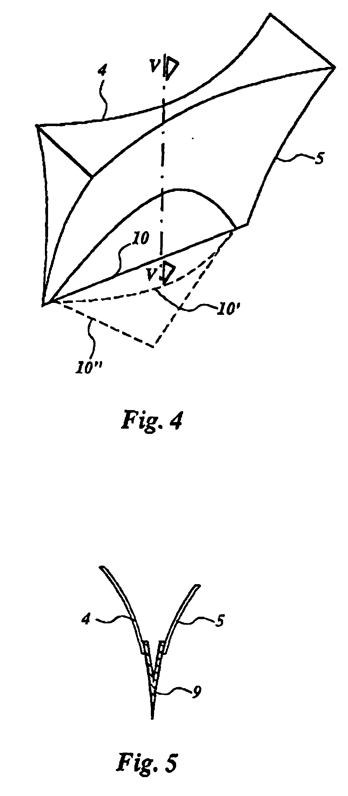

As is shown in the embodiment according to Figures 4 and 5, the lower boundary edges of boundary surfaces 4 and 5 may be curvilinear. In this embodiment a V-shaped, seen in sectional view, light-transmitting element 9 is disposed between the lower ends of the boundary walls. As is illustrated in full lines and in dotted lines in Figure 4, the lower boundary line of said element may be rectilinear (10), curvilinear (10') or angular (10"). The curved or the angular boundary line may thereby also extend above the line which connects the lower ends of the cross lamella.

## Claims

1. A light box, wherein a number of cross lamellae are arranged in at least substantially parallel relationship, transversely to the longitudinal direction of the light box, under (a) light source(s) which is housed in said light box, and wherein a cross lamella is bounded by lateral boundary surfaces, which slope upwards from the lower boundary edge of the lamella in a direction away from each other, in such a manner that the cross lamella is substantially triangular, seen in sectional view, whilst one lateral boundary surface extends from the lower boundary edge of the cross lamella over a larger height than the other lateral boundary surface, **characterized in that** the space between said boundary surfaces is light-transmitting.

2. A light box according to claim 1, **characterized in that** the space between said boundary surfaces is completely open.

3. A light box according to claim 1 or 2, **characterized in that** an at least partially light-transmitting element is disposed near the lower edges of said boundary surfaces.

4. A light box according to claim 1, **characterized in that** an at least partially light-transmitting element is disposed between said boundary surfaces, at some distance from the lower edges and from the upper edges.

5. A cross lamella obviously intended for being used in a light box according to any one of the preceding claims and bounded by lateral boundary surfaces, which slope upwards from the lower boundary edge of the lamella in a direction away from each other, in such a manner that the cross lamella is substantially triangular, seen in sectional view, whilst one lateral boundary surface extends from the lower boundary edge of the cross lamella over a larger height than the other lateral boundary surface, **characterized in that** the space between said boundary surfaces is light-transmitting.

## Patentansprüche

1. Lichtkasten, bei welchem eine Anzahl von Querlamellen in wenigstens einer im wesentlichen parallelen Beziehung angeordnet ist,
quer zu der Longitudinalrichtung des Lichtkastens, unter (einer) Lichtquelle(n), welche in dem Lichtkasten angeordnet ist, und wobei eine Querlamelle durch laterale Grenzflächen begrenzt wird, welche sich von der unteren Grenzkante der Lamelle in einer Richtung weg voneinander nach oben neigen, in solch einer Weise, daß die Querlamelle im wesentlichen dreieckig ist, in einer Schnittansicht gesehen, während eine laterale Grenzfläche sich von der unteren Grenzkante der Querlamelle über eine größere Höhe erstreckt als die andere laterale Grenzfläche, **dadurch gekennzeichnet, daß** der Raum zwischen den Grenzflächen lichtdurchlässig ist.

2. Lichtkasten gemäß Anspruch 1, **dadurch gekennzeichnet, daß** der Raum zwischen den Grenzflächen vollständig offen ist.

3. Lichtkasten gemäß Anspruch 1 oder 2, **dadurch gekennzeichnet, daß** ein wenigstens teilweise lichtübertragendes Element nahe den unteren Kanten der Grenzflächen angeordnet ist.

4. Lichtkasten gemäß Anspruch 1, **dadurch gekennzeichnet, daß** ein wenigstens teilweise lichtübertragendes Element zwischen den Grenzflächen angeordnet ist in einem Abstand von den unteren Kanten und von den oberen Kanten.

5. Querlamelle, welche offensichtlich vorgesehen ist, um in einem Lichtkasten gemäß einem der vorangehenden Ansprüche verwendet zu werden, und welche durch laterale Grenzflächen begrenzt ist, welche sich von der unteren Grenzkante der Lamelle in einer Richtung weg voneinander nach oben neigen, in solch einer Weise, daß die Querlamelle im wesentlichen dreieckig ist, in einer Schnittansicht gesehen, während eine laterale Grenzfläche sich von der unteren Grenzkante der Querlamelle über eine größere Höhe erstreckt als die andere laterale Grenzfläche, **dadurch gekennzeichnet, daß** der Raum zwischen den Grenzflächen lichtübertragend ist.

## Revendications

1. Coffret lumineux, dans lequel est disposé un certain nombre de lamelles transversales, dans une relation au moins sensiblement parallèle, transversalement à la direction longitudinale du coffret lumineux, sous une (des) source(s) de lumière qui est (sont) logée(s) dans le coffret lumineux, et dans lequel une lamelle transversale est délimitée par des surfaces latérales limitrophes, qui s'inclinent vers le haut à partir du bord limitrophe inférieur de la lamelle dans une direction éloignée l'une de l'autre, de telle sorte que la lamelle transversale est sensiblement triangulaire, vue en coupe, tandis qu'une surface latérale limitrophe s'étend à partir du bord limitrophe inférieur de la lamelle transversale sur une plus grande hauteur que l'autre surface latérale limitrophe, **caractérisé en ce que** l'espace entre lesdites surfaces limitrophes transmet la lumière.

2. Coffret lumineux selon la revendication 1, **caractérisé en ce que** l'espace entre lesdites surfaces limitrophes est entièrement ouvert.

3. Coffret lumineux selon la revendication 1 ou 2, **caractérisé en ce qu'**un élément au moins partiellement transmetteur de lumière est disposé à proximité des bords inférieurs desdites surfaces limitrophes.

4. Coffret lumineux selon la revendication 1, **caractérisé en ce qu'**un élément au moins partiellement transmetteur de lumière est disposé entre lesdites surfaces limitrophes, à une certaine distance des bords inférieurs et des bords supérieurs.

5. Lamelle transversale naturellement prévue pour être utilisée dans un coffret lumineux selon l'une quelconque des revendications précédentes et délimitée par les surfaces latérales limitrophes, qui s'inclinent vers le haut à partir du bord limitrophe inférieur de la lamelle dans une direction éloignée entre elles, de telle sorte que la lamelle transversale est sensiblement triangulaire, vue en coupe, tandis qu'une surface latérale limitrophe s'étend à partir du bord inférieur limitrophe de la lamelle transversale sur une plus grande hauteur que l'autre surface latérale limitrophe, **caractérisée en ce que** l'espace entre lesdites surfaces limitrophes transmet la lumière.
